# EUROPÄISCHE PATENTANMELDUNG

(11) **EP 1 096 208 A2**
(43) Veröffentlichungstag der Anmeldung: **02.05.2001**
(21) Anmeldenummer: 00123527.4
(22) Anmeldetag: 27.10.2000
(51) Int. Cl.: F24F 13/04

(54) **Raumlüftungssystem für Gebäudesammellüftungsanlagen unter Einsatz von Rohrleitungssystemen und Verfahren zu seiner Anwendung**

(30) Priorität: 27.10.1999 DE 19951810
(71) Anmelder: Walther-Technik, Inhaber Thomas Walther, 08451 Crimmitschau (DE)
(72) Erfinder: Walther, Thomas, 08459 Neukirchen (DE); Penzel, Andreas, 08451 Crimmitschau (DE)
(74) Vertreter: Auerbach, Bettina

(57) **Zusammenfassung**

Die Aufgabe besteht darin, unter der Voraussetzung der Verfügbarkeit von gemeinsamen Frischluftzuführungs- und gegebenenfalls Abluftabführungsleitungssystemen beliebige und individuell steuerungsfähige Raumklimatisierungen erreichen zu können. Die steuerungsfähigen Parameter sollen dabei insbesondere die Raumluftwechselrate, die Raumlufttemperatur, die Raumluftfeuchte und bei Erfordernis auch der Luftdruck sein.

Das vorgeschlagene Raumlüftungssystem besteht aus wenigstens zwei Frischluftversorgungsleitungen, die so angeordnet sind, daß diese über jeweils ein Klappenstellregister den Kontakt zum jeweils zu belüftenden Raum herstellen. Damit können die Versorgungsleitungen für unbehandelte und behandelte Frischluft sowohl außerhalb als auch innerhalb des zu belüftenden Raumes angeordnet sein. Dazu bilden wenigstens je eine Seitenwand der beiden Frischluftversorgungsleitungen eine gemeinsame Ebene. In einer der gegebenenfalls mehrfach gegebenen gemeinsamen Ebenen wird das Klappenstellregister für die Frischluftversorgung des jeweiligen Raumes angeordnet.

Derartige Raumlüftungssysteme werden in der modernen Gebäudetechnik benötigt.

## Beschreibung

Die Erfindung betrifft ein Raumlüftungssystem für Gebäudesammellüftungsanlagen unter Einsatz von Rohrleitungssystemen und das Verfahren zu seiner Anwendung. Derartige Raumlüftungssysteme werden in der modernen Gebäudetechnik benötigt.

Insbesondere bei sogenannten Niedrigenergiehäusern muß aus energetischen und aus bauphysikalischen Gründen auf das unkontrollierte Entweichen von verbrauchter Raumluft verzichtet werden. Einerseits wird durch die verwendeten Baukonstruktionen die Diffusionsfähigkeit der Raumwände stark eingeschränkt. Andererseits fordert die angestrebte Rückgewinnung wenigstens von Teilen des Energieinhaltes der Abluft deren geordnete Führung über Wärmetauschersysteme. In derartigen Fällen wird die Heizenergiezuführung mit Zwangslüftungen verbunden.
In bekannten technischen Lösungen erfolgt dazu raum-, wohnungs- oder gebäudebezogen das Absaugen der verbrauchten Raumluft und die Übertragung deren fühlbarer Wärme auf einen Frischluftstrom. Dieser vorgewärmte Frischluftstrom wird dabei wahlweise durch Einsatz von Zusatzenergie aus fossilen oder regenerativen Quellen nachgeheizt. An den Austrittsstellen des Rohrleitungssystems im jeweiligen zu versorgenden Raum werden unterschiedliche Raumtemperaturen in solchen Fällen dadurch sichergestellt, daß der zugeführte aufgeheizte Frischluftstrom mehr oder weniger stark durch Regeleinrichtungen gedrosselt wird.
Modernere Sammellüftungssysteme verfügen dagegen neben der Sammelleitung für thermisch vorbehandelte Frischluft über eine zusätzliche Sammelleitung für die Zuführung thermisch unbehandelter Frischluft. Derartige Systeme ermöglichen das Gewährleisten unterschiedlicher klimatischer Bedingungen in einzelnen Räumen des Gebäudes bei jederzeitiger Zuführung der bauphysikalisch begründeten Mindestfrischluftmengen.

In diesen Fällen wird durch die Steuerungstechnik der raumbezogene Austritt der unterschiedlich temperierten und gegebenefalls unterschiedlich feuchten Frischluftströme aus beiden Rohrleitungssystemen getrennt gesteuert, so daß bedarfsweise sowohl die Energiezufuhr als auch die Frischluftzufuhr differenziert gesteuert werden können.
Eine dazu geeignete technische Lösung wird in der WO 98/03006 bekannt gemacht. Gemäß dieser vorgeschlagenen technischen Lösung erfolgt die Frischluftzuführung zum einzelnen Raum jeweils über Frischluftmischkästen, die mit den voneinander getrennten Leitungen für unterschiedlich temperierte unf feuchte Frischluftströme in Verbindung stehen. Der Austritt der Leitungen in die Mischkästen wird durch unterschiedlich ausgeführte Klappenstellregister gesteuert. Das Klappenstellregister ist dabei als Schieberegister mit zwei am Stellschieber starr angeordneten Verschlußklappen oder als Drehregister mit zwei an der Drehachse starr angeordneten Verschlußklappen ausgeführt. Die vorgeschlagene Lösung erlaubt es nicht, allein durch ein angeordnetes Klappenstellregister die gewünschte Raumbelüftung aus den Frischluftzuführungsleitungen direkt zu realisieren. Durch die gewählte Ausführung der Klappenstellmechanismen für den gesteuerten Übergang der Frischluftströme vom Sammelleitungssystem zum jeweiligen Raum ist auch die einfache Versorgung nebeneinander liegender Räume mit Frischluftmengen unterschiedlicher physikalischer Parameter erschwert.
Die bisher bekannten technischen Lösungen sind mit erheblichen bautechnischen, gerätetechnischen und steuerungstechnischen Aufwendungen für deren praktische Realisierung verbunden, was den bisher geringen Verbreitungsgrad begründet.

Die Aufgabe der Erfindung besteht deshalb in der Überwindung der Mängel des bekannten Standes der Technik und im Schaffen einer technischen Lösung, mit deren Hilfe auf kostengünstige und technisch einfache Weise unter der Voraussetzung der Verfügbarkeit von gemeinsamen Frischluftzuführungs- und gegebenenfalls Abluftabführungsleitungssystemen beliebige und individuell steuerungsfähige Raumklimatisierungen erreicht werden können.
Die steuerungsfähigen Parameter sollen dabei insbesondere die Raumluftwechselrate, die Raumlufttemperatur, die Raumluftfeuchte und bei Erfordernis auch der Luftdruck sein.

Erfindungsgemäß wird die Aufgabe durch die kennzeichnenden Merkmale der Ansprüche 1, 2 und 10 gelöst. Die vorteilhaften Ausgestaltungen sind in den jeweiligen Unteransprüchen beschrieben.
Danach besteht das vorgeschlagene Raumlüftungssystem für Gebäudesammellüftungsanlagen unter Einsatz von Rohrleitungssystemen in einer ersten grundsätzlichen Gestaltungsform aus wenigstens zwei Frischluftversorgungsleitungen, die so angeordnet sind, daß diese über jeweils ein Klappenstellregister den Kontakt zum jeweils zu belüftenden Raum herstellen. Damit können die Versorgungsleitungen für unbehandelte und behandelte Frischluft sowohl außerhalb als auch innerhalb des zu belüftenden Raumes angeordnet sein. Dazu bilden wenigstens je eine Seitenwand der beiden Frischluftversorgungsleitungen eine gemeinsame Ebene. In einer der gegebenenfalls mehrfach gegebenen gemeinsamen Ebenen wird das Klappenstellregister für die Frischluftversorgung des jeweiligen Raumes angeordnet. Das Klappenstellregister besteht im wesentlichen aus der Klappe für die Steuerung des Austritts physikalisch unbehandelter Frischluft, der Klappe für die Steuerung des Austritts physikalisch vorbehandelter Frischluft und der gemeinsamen Drehachse, an der diese Klappen starr und zueinenader in einem Winkel zwischen 0° und 90° befestigt sind. Die Achse ist dazu in der gewählten gemeinsamen Ebene der Seitenwände der Frischluftzuführungsleitungen angeordnet. Die winklige Befestigung der Austrittsverschlußklappen verhindert den vollständigen Verschluß einer Austrittsöffnung im Interesse der Zuführung einer definierten Mindestluftmenge aus der jeweiligen Frischluftversorgungsleitung. Dagen läßt sich im Falle der Wahl eines Winkels von 0° im Bedarfsfall der vollständige Verschluß beider Austrittsverschlußklappen sichern. Durch Verdrehen der gemeinsamen Achse für die Klappen lassen sich nunmehr auf einfache Weise stufenlos Frischluftströme unterschiedlicher Beschaffenheit gewinnen und dem zu belüftenden Einzelraum zuführen. Die gemeinsame Achse für die Frischluftaustrittsklappen besitzen dazu einen regelbaren Verstellmechanismus, der individuell durch die Raumbenutzer oder über die zentrale Gebäudesteuerung angesteuert werden kann.

Eine weitere grundsätzliche Gestaltungsform des Raumlüftungssystems sieht vor, daß neben wenigstens zwei Frischluftversorgungsleitungen auch wenigstens eine Abluftleitung angeordnet sind, mit denen der jeweils zu belüftende Raum über jeweils ein Klappenstellregister in Verbindung steht. Dazu werden wenigstens je eine Seitenwand der Frischluftversorgungsleitungen und der verfügbaren Abluftleitung in einer gemeinsamen Ebene angeordnet.

Die Luftein- und -austrittsöffnungen für den jeweils zu belüftenden Raum befinden sich in dieser gewählten Ebene und werden durch Klappen mehr oder weniger stark verschlossen, die auf einer gemeinsamen Achse starr befestigt sind. Diese Achse ist in der gewählten Seitenwandebene angeordnet und steht mit einem regelbaren Verstellmechanismus in Verbindung. Durch die Anordnung der Verschlußklappen an dieser gemeinsamen Achse läßt sich durch Verdrehen dieser Achse nun neben der Zuführung von unterschiedlichen Anteilen unbehandelter und vorbehandelter Frischluft auch die Menge der in die Abluftleitung abzuleitenden verbrauchten Raumluft regulieren.

In einer besonderen Ausführungsform sind zwischen den Frischluftversorgungs- und Abluftsammelleitungen und den zu belüftenden Räumen Frischluftmischkästen und Abluftsammler angeordnet. Diese Maßnahme erlaubt die Verlegung der gemeinsamen Versorgungsleitungen in separaten Gebäudeteilen, was zu Vorteilen hinsichtlich der Lärmbelastung und der Wahrnehmbarkeit von unvermischten Frischluftströmen führen kann.

Weiterhin ist es möglich, in den Frischluftmischkästen und in den Abluftsammlern verstellbare Regelklappen anzuordnen, mit deren Hilfe eine gewünschte Luftdrucksituation im jeweiligen belüfteten Raum gewährleistet werden kann. Unter der Voraussetzung, des Vorhandenseins eines jeweiligen Überdruckes in den Frischluftzuführungsleitungen und eines Unterdrucks in der jeweiligen Abuftsammelleitung lassen sich damit bedarfsweise unabhängig von der Zusammensetzung des zugführten vermischten Frischluftstromes entsprechend der jeweiligen Raumfunktion Überdruckverhältnisse oder Unterdurckverhältnisse realisieren.

Als regelbare Verstellmechanismen der gemeinsamen Achsen für die Verschlußklappen an den Frischluftzuführungs- und Abluftsammelleitungen sowie für die Regelklappen in den Frischluftmischkasten und Abluftsammlern werden Stellmotoren angeordnet.

Bevorzugt sind in den Mischkästen feststehende oder verstellbare Leitbleche angeordnet, die das verbesserte Vermischen der den Mischkästen zugeführten Frischluftströme unterschiedlicher Beschaffenheit bewirken sollen.

Es ist möglich, die an den Frischluftzuführungsleitungen und an den Abluftleitungen unmittelbar nebeneinander für die Be- und Entlüftung verschiedener Räume oder Raumbereiche angeordneten Mischkästen und Abluftsammler mit Zwischenwänden voneinander getrennt auszuführen. Zu diesem Zweck werden zumindest abschnittsweise die entsprechenden Mischkästen und Abluftsammler parallel zu den entsprechenden Sammelleitungen ausgeführt und dabei realisierungstechnische und kostenseitige Vorteile erreicht.

Im Bedarfsfall sind die Frischluftzuführungsleitungen, die nachgeordneten Mischkästen, die Abluftsammelleitungen, die vorgeordneten Abluftsammler und/oder die Verstellmechanismen mit wärme-, kälte- und/oder schalldämmenden Umhüllungen oder Auskleidungen ausgestattet.
Derartige Maßnahmen dienen der Energieeinsparung und gegebenenfalls der Vermeidung von Lärmbelastungen.

Es ist auch möglich, die Einzelkomponenten des Raumlüftungssystems modulartig auszubilden, so daß sowohl Vorfertigung und Montage als auch bedarfsweise die Demontage erleichtert werden.

Weiterhin ist die entwickelte technische Lösung durch ein Verfahren zur Anwendung eines Raumlüftungssystems gekennzeichnet, wobei alternativ von den wenigstens zwei den Einzelräumen zugeführten Frischluftströmen wenigstens ein Frischluftstrom durch Erwärmung thermisch vorbehandelt wird, wenn das Raumlüftungssystem den Zwecken der Raumbeheizung dienen soll. In diesem Fall kann naheliegenderweise die fühlbare Wärme des gesamten oder eines Teils des Abluftstroms auf diesen Frischluftstrom übertragen werden. Anderenfalls wird wenigstens ein Frischluftstrom durch Kühlung thermisch vorbehandelt, wenn das Raumlüftungssystem für Zwecke der Raumkühlung eingesetzt wird.
Es ist auch möglich, wenigstens einen Frischluftstrom durch Be- oder Entfeuchtung vorzubehandeln, wenn das Raumlüftungssystem bevorzugt für Zwecke der Raumluftfeuchteregulierung eingesetzt wird.
Schließlich kann wenigstens ein Frischlaftstrom durch Energiezuführung oder -entzug sowie durch Be- oder Entfeuchtung vorbehandelt werden. Dies geschieht in den Fällen, in denen das Raumlüftungssystem Zwecken der Raumklimatisierung dient.
Mit Hilfe des vorgeschlagenen Raumlüftungssystems lassen sich die Mengenverhältnisse zwischen zugeführter Frischluft und abgeführter Abluft stabil auf gewünschte Werte voreinstellen.

Dazu dienen die Feststellklappen in den Mischkästen und Abluftsammlern. Durch diese Maßnahme läßt sich im jeweiligen Zielraum im praktisch relevanten Einstellbereich ein beliebiger Über- oder Unterdruck gewährleisten. Dies kann zur Vermeidung von Bauschäden oder Behaglichkeitseinbußen bedeutungsvoll sein. In einer zwangsbelüfteten Wohnung läßt sich auf diese Weise beispielsweise im Wohnbereich das Eindringen von ungereinigter Umgebungsluft und von Wrasen und Gerüchen aus dem Sanitärbereich und bedarfsweise das Austreten von Dämpfen und Gerüchen aus dem Sanitärbereich in die benachbarten Wohnräume vermeiden.

Die Vorteile der Erfindung bestehen zusammengefaßt in der Schaffung einer wirksamen und mit geringem Aufwand realisierbaren technischen Lösung zur Ausstattung von modernen Gebäudesammellüftungsanlagen. Bei einfachster Rohrleitungsgestaltung können von lediglich zwei gemeinsamen Frischluftversorgungsleitungen Mischluftsströme gewonnen werden, mit denen zur Belüftung individueller Räume praktisch beliebige Mischluftparameter gewährleistet werden können. Bei allen Einstellungsvarianten ist sicherungsfähig, daß die bauphysikalisch erforderliche Mindestbelüftung nicht unterschritten wird. Grundsätzlich ist es auch möglich, neben der Temperierung eines der beiden Frischluftströme auch wenigstens einen der beiden Frischluftstrome zu be- oder entfeuchten, so daß parallel oder alternativ zur Raumtemperierung auch wählbare Frischluftfeuchten eingestellt werden können. In diesem Zusammenhang lassen sich auf vergleichsweise einfache Weise Raumklimatisierungen realisieren. Rationalisierungseffekte werden insbesondere erzielt durch den Einsatz neuartiger Klappenstellregister einerseits und durch die praktisch beliebige Parallelschaltungsmöglichkeit von unterschiedlichen Einzelraumbelüftungen als Regelparameter für zentrale oder individuelle Steuerungseinrichtungen muß im wesentlichen nur der Stellantrieb des eingesetzten Klappenstellregisters bedient werden. Im Falle des parallel zur Frischluftzuleitung verfügbaren Abluftableitungssystems kann auf einfache Weise durch Voreinstellung der Regelklappen in den Mischkästen für die Frischluft und in den jeweiligen Abluftsammlern die gewünschte Drucksituation im zwangsbelüfteten Raum gewährleistet werden.

Die Erfindung soll nachstehend an Ausführungsbeispielen näher erläutert werden.

In der beigefügten Zeichnung zeigen
- Fig. 1: die schematische Darstellung des Frischluftzuführungssystems im Bereich der Luftaustrittsklappen;
- Fig. 2: den schematischen Querschnitt von prismatischen Frischluftversorgungsleitungen mit nachgeordnetem Frischluftmischkasten;
- Fig. 3: den schematischen Querschnitt von rohrförmigen Frischluftversorgungsleitungen mit nachgeordnetem Rohrleitungshosenstück;
- Fig. 4: die schematische Grundrißdarstellung eines Raumlüftungssystems mit voneinander getrennten Frischluftmischkästen;
- Fig. 5: die schematische Schnittdarstellung eines Klappenstellregisters mit raumbezugenem Frischluftmischkasten und Abluftsammler an übereinsander angeordneten jeweils zwei Frischluftversorgungs- und Abluftleitungen;
- Fig. 6: die schematische Schnittdarstellung von für zwei benachbarte Räume nebeneinander angeordneten Klappenstellregistern;
- Fig. 7: die schematische Schnittdarstellung von nebeneinander angeordneten Frischluftversorgungs- und Abluftleitungen in Verbindung mit einem Klappenstellregister mit Kennzeichnung der Frischluft- und Abluftströme;
- Fig. 8: die schematische Schnittdarstellung von zwei benachbarten Klappenstellregistern an übereinander angeordneten jeweils zwei Frischluftversorgungs- und Abluftleitungen mit Kennzeichnung von unterschiedlichen Be- und Entlüftungsvarianten.

### Ausführungsbeispiel 1

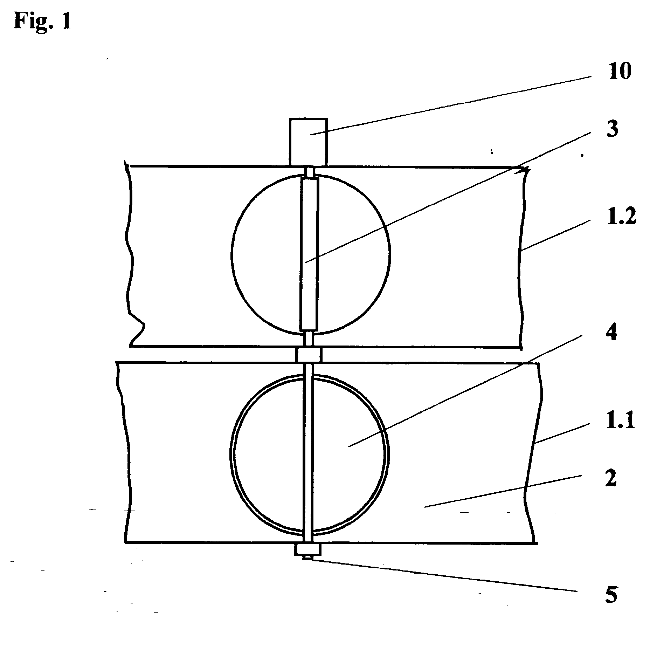

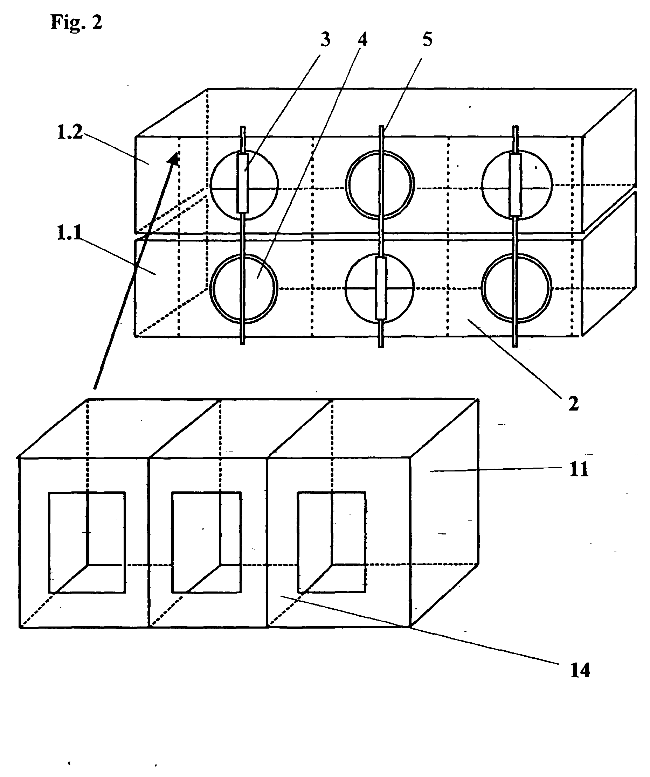

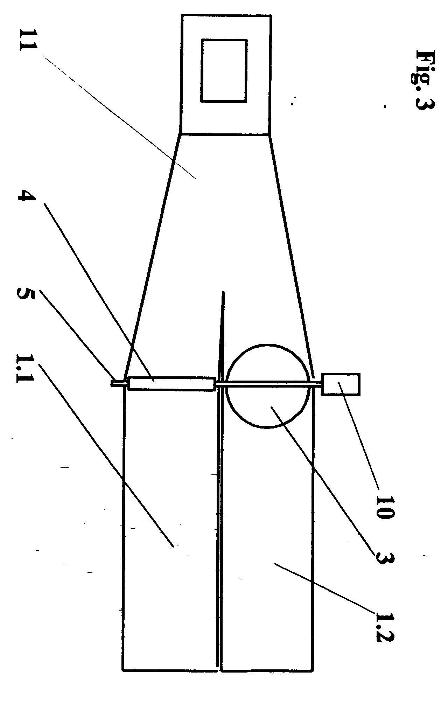

In einem mehretagigem Betriebsgebäude befindet sich gemäß Fig. 1 bis 3 im Erdgeschoß ein Lager- und Verkaufsbereich und im darüberliegenden Geschoß ein Bürokomplex. Im Deckenbereich des Erdgeschosses sind zwei Frischluftversorgungsleitungen 1 angeordnet, die einerseits unbehandelte Frischluft und andererseits auf 50°C vorerwärmte Frischluft transportieren. Die rechteckigen Frischluftversorgungsleitungen 1.1, 1.2 sind jeweils unmittelbar nebeneinander angeordnet. Für die Raumbeheizung des Erdgeschosses sind an mehreren Stellen der Frischluftversorgungsleitungen 1.1, 1.2 Luftaustrittsöffnungen angeordnet, die jeweils durch an einer gemeinsamen Achse 5 befestigte Frischluftaustrittsklappen 3, 4 verschlossen werden können. Die an jeder einzelnen Achse 5 angeordneten Verstellmechanismen 10 werden durch Temperaturregler gesteuert, so daß an der Mischluftaustrittsöffnung des den Frischluftaustrittsklappen 3, 4 nachgeordneten Frischluftmischkastens 11 eine Mischlufttemperatur von 18 °C gewährleistet wird.
An den Frischluftversorgungsleitungen 1.1, 1.2 sind weiterhin Luftaustrittsöffnungen angeordnet, die mit Rohrleitungshosenstücken in Verbindung stehen. Die Mischluftaustrittsöffnungen der jeweiligen Rohrleitungshosenstücke enden im Fußbodenbereich der darüberliegenden Büroetage.
Die ihnen zugeordneten Frischluftaustrittsklappen 3, 4 werden in Abhängigkeit von Temperaturreglern in den Büroräumen über die mit den jeweiligen gemeinsamen Achsen 9 für die Verschlußklappen verbundenen Verstellmechanismen 10 so reguliert, daß die Frischlufttemperatur an den verschiedenen Mischluftaustrittsöffnungen zwischen 22 °C und 28 °C beträgt.

### Ausführungsbeispiel 2

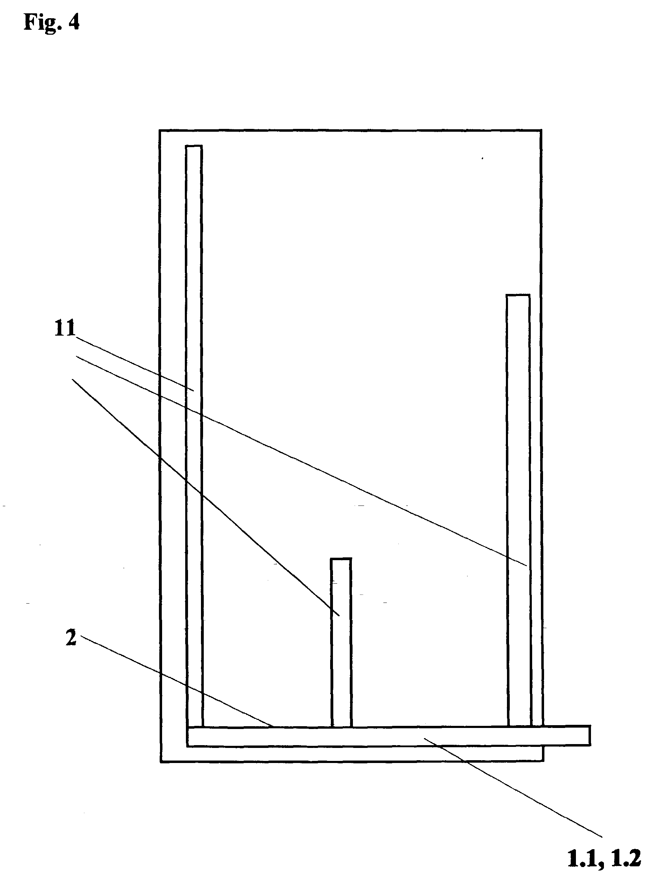

Gemäß Fig. 4 sind in einer Lagerhalle für Frischgemüse Waren mit unterschiedlichen Anforderungen an die optimale Lagertemperatur eingelagert. An einer Seitenwand der Lagerhalle befinden sich insgesamt drei unmittelbar nebeneinander verlegte Rohrleitungen 1.1, 1.2, 11 mit recheckigem Querschnitt. Zwei dieser Leitungen sind als Frischluftversorgungsleitungen 1.1, 1.2 so verlegt, daß sie mit der Außenluft in Verbindung stehen. Diese beiden Frischluftversorgungsleitungen 1.1, 1.2 sind mit Gebläsen ausgestattet, die Frischluft ansaugen und in die jeweils nachgeordnete Frischluftversorgungsleitung 1.1, 1.2 fördern.

Eine der beiden Frischluftversorgungsleitung 1.1 steht außerdem mit einem Kühlaggregat in Verbindung, mit dessen Hilfe die Frischluft in dieser Frischluftversorgungsleitung 1.1 eine Temperatur von ca. 0 °C erreicht. Diese Frischluftversorgungsleitung 1.1 ist außerdem mit einer wärmedämmenden Umhüllung ausgestattet, so daß die erzeugte Kühlluft ohne wesentliche Veränderung auch an den Luftaustrittsöffnungen dieser Frischluftversorgungsleitung 1.1 zur Verfügung steht.
Die dritte Rohrleitung befindet sich lediglich im Hallenbereich und ist als gemeinsamer Frischluftmischkasten 11 mit Mischkastenzwischenwänden 14 ausgestattet, um in verschiedenen Bereichen der Lagerhalle unterschiedliche Lagertemperaturen gewährleisten zu können. Der gemeinsame Frischluftmischkasten 11 steht mit seinen Abschnitten dazu jeweils mit den beiden Frischluftversorgungsleitungen 1.1, 1.2 in Verbindung, wobei die Luftaustrittsöffnungen der Frischluftversorgungsleitungen 1.1, 1.2, die sich in einer gemeinsamen Seitenwandebene 2 dieser Frischluftversorgungsleitungen 1.1, 1.2 befinden, durch Luftaustrittsklappen 3, 4 verschlossen werden können. Die an einer gemeinsamen Achse 9 um 89 ° versetzt starr befestigten Luftaustrittsklappen 3, 4 werden jeweils mit separaten Verstellmechanismen 10 so gesteuert, daß in den einzelnen Bereichen des Frischluftmischkastens 11 Temperaturen zwischen 4 °C und 15 °C realisiert werden.
Der gemeinsame Frischluftmischkasten 11 verfügt über Mischluftaustrittsöffnungen, mit deren Hilfe die temperierte Frischluft in die einzelnen Lagerbereiche gelangt.

### Ausführungsbeispiel 3

Gemäß Fig. 1 bis 4 wird die Belüftung einer Mehrzweckhalle durch zwei an einer Außenwand beginnende Frischluftversorgungsleitung 1.1, 1.2 realisiert. Beide Frischluftversorgungsleitungen 1.1, 1.2 sind über schalltechnische Dämmkulissen mit Transportgeblasen verbunden.
Diese Gebläse saugen jeweils Frischluft an und erzeugen in den Frischluftversorgungsleitungen 1.1, 1.2 einen Überdruck.
Die erste Frischluftversorgungsleitung 1.1 steht mit einem Wärmetauscher in Verbindung, mit dessen Hilfe bedarfsweise auch unter Einsatz der aus der Mehrzweckhalle abgeführten verbrauchten Abluft eine Aufheizung oder durch Kopplung mit einem Kälteaggregat eine Abkühlung erfolgt.

Die zweite Frischluftversorgungsleitung 1.2 steht mit einem Be- oder Entfeuchter in Verbindung, so daß die nach dem Be- oder Entfeuchter bereitstehende Frischluft eine deutlich andere relative Feuchte als die unbehandelte Frischluft aufweist.
Die beiden Frischluftversorgungseitungen 1.1, 1.2 enden in unmittelbarer Nähe einer Außenwand der Mehrzweckhalle über ein Rohleitungshosenstück in einem Frischluftmischkasten 11, wobei die Luftaustrittsöffnungen der beiden Frischluftversorgungsleitungen 1.1, 1.2 mit Frischluftaustrittsklappen 3, 4 ausgestattet sind. Diese Frischluftaustrittsklappen 3, 4 sind wie in den Beispielen 1 und 2 um 89° versetzt auf einer gemeinsamen Achse 9 starr befestigt. Diese Achse 9 wird mit einem Verstellmechanismus 10 betätigt, der seinerseits mit dem Klimaregelgerät der Mehrzweckhalle in Verbindung steht. Der Frischluftmischkasten 11 ist insbesondere im Anfangsbereich mit Einbaublechen ausgestattet, die als statische Mischelemente zu einer schnellen und homogenen Verteilung der verschiedenen Frischluftanteile führen. Der Mischkasten 11 ist als verzweigte Rohrleitung mit unterschiedlichen Querschnitten im Fußbodenbereich der Mehrzweckhalle angeordnet. Er besitzt in regelmäßigen Abständen Mischluftaustrittsöffnungen für die thermisch und feuchteregulierte Frischluft.

### Ausführungsbeispiel 4:

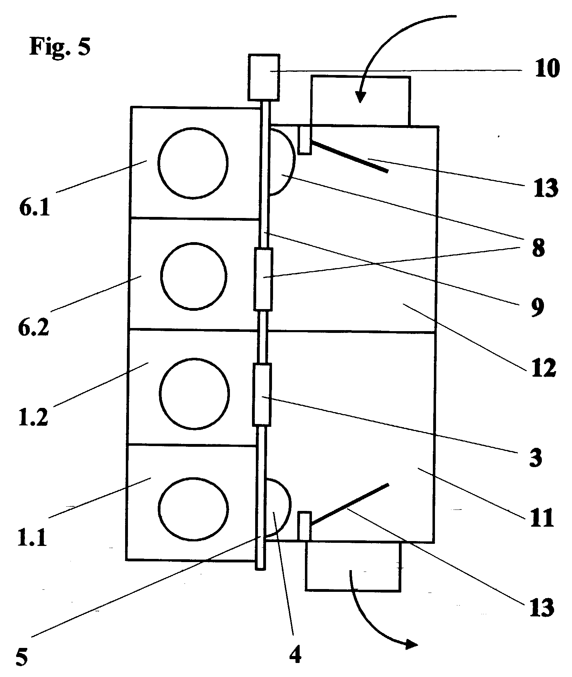

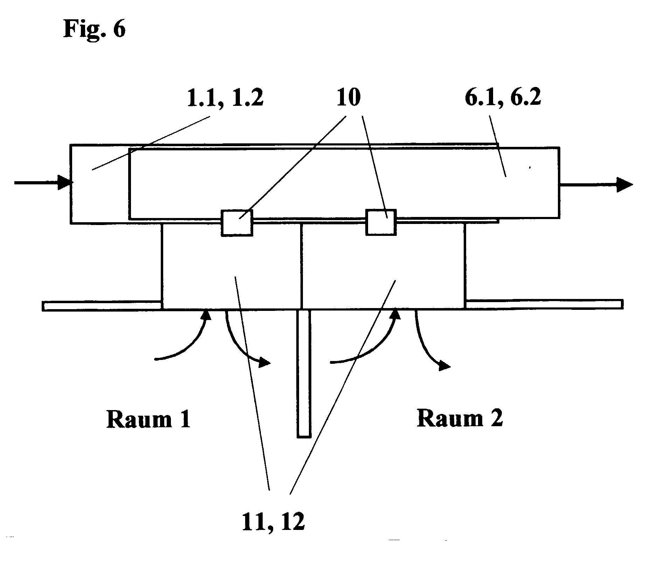

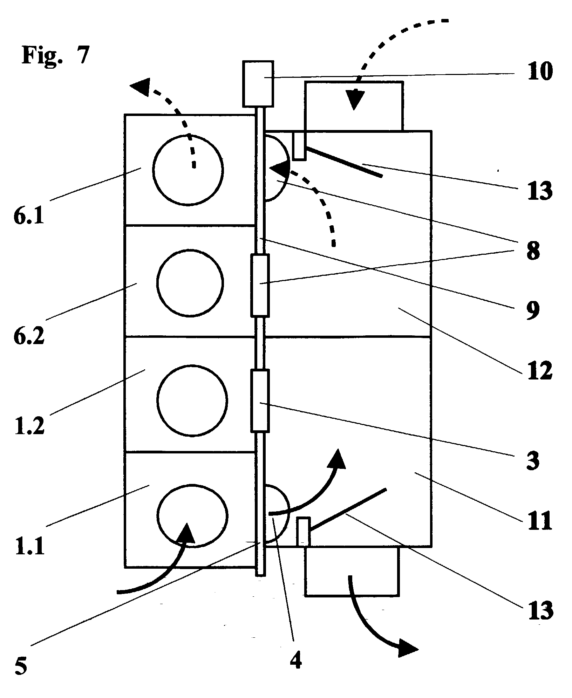

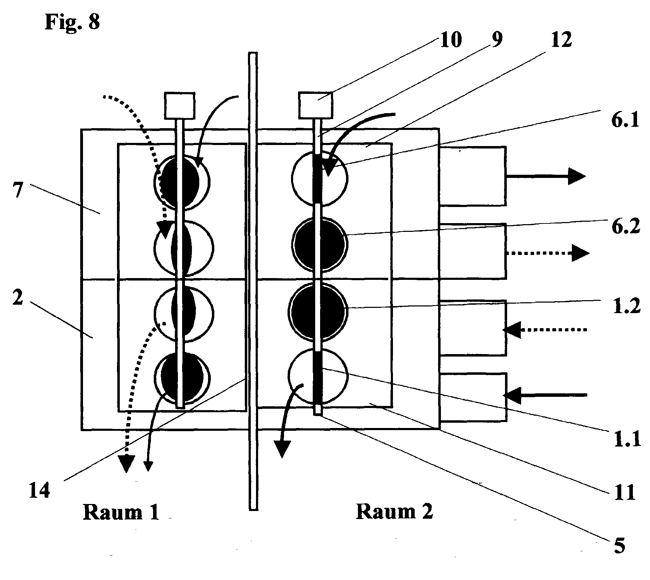

Gemäß der Figuren 5 bis 8 ist in einem Wohngebäude ein Zwangslüftungssystem installiert, das aus jeweils zwei Frischluftversorgungsleitungen 1.1, 1.2 und zwei Abluftleitungen 6.1, 6.2 besteht. Diese Leitungen 1.1, 1.2, 6.1, 6.2 sind so übereinander angeordnet, daß die Seitenwände 2 der Frischluftversorgungsleitungen 1.1, 1.2 und die Seitenwände 7 der Abluftleitungen 6.1, 6.2 in einer gemeinsamen senkrechten Ebene liegen. Sowohl die Frischluftversorgungsleitungen 1.1, 1.2 als auch die Abluftleitungen 6.1, 6.2 stehen mit Luftfördereinrichtungen in Verbindung, so daß in den Frischluftversorgungsleitungen 1.1, 1.2 ein Überdruck und in den Abluftleitungen 6.1, 6.2 jeweils ein Unterdruck herrscht. An den Frischluftversorgungs- und Abluftleitungen 1.1, 1.2, 6.1, 6.2 sind raumbezogene Klappenstellregister mit jeweils zwei Klappen 3, 4 für den Austritt unbehandelter und vorbehandelter Frischluft sowie zwei Klappen 8 für den Eintritt der Abluft in die Abluftleitungen 6.1, 6.2 angeordnet.

In diesem Fall sind die installierten Abluftleitungen 6.1, 6.2 hinsichtlich der Bilanz der geförderten Luftmengen den jeweiligen Frischluftversorgungsleitungen 1.1, 1.2 zugeordnet. Der Frischluftversorgungsleitung 1.2 für unbehandelte Frischluft ist im Ausführungsbeispiel die Abluftleitung 6.2 für die Förderung der Abluft aus im wesentlichen unbehandelter verbrauchter Frischluft zugeordnet. Bei vollständiger Öffnung der an dieser Frischluftversorgungsleitung 1.2 installierten Klappe 3 wird aus der Frischluftversorgungsleitung 1.1 für thermisch vorbehandelte Frischluft nur eine voreingestellte Mindestmenge gefördert.
Im entgegengesetzten Fall gelangt über die vollständig geöffnete Klappe 4 an der Frischluftversorgungsleitung 1.1 überwiegend thermisch vorbehandelte Frischluft in den betreffenden Raum. Synchron mit dieser Einstellung des Klappenstellregisters ist nun die Klappe 8 für den Eintritt der Abluft in die Abluftleitung 6.1 ebenfalls vollständig geöffnet, so daß der Energieinhalt aus der verbrauchten thermisch vorbehandelten Frischluft durch die separate Abführung in der Abluftleitung 6.1 im Sinne einer Umluftförderung auf den thermisch vorzubehandelnden Frischluftstrom übertragen werden kann. Den jeweiligen Klappen 3, 4 für den Frischluftaustritt ist ein Frischluftmischkasten 11 nachgeordnet.
Den Klappen 8 für den Eintritt der Abluft in die Abluftleitung 6.1, 6.2 ist jeweils ein Abluftsammler 12 - in Strömungsrichtung der Abluft gesehen - vorgeordnet.
Sowohl in den Frischluftmischkästen 11 als auch in den Abluftsammlern 12 sind Regelklappen 13 installiert, mit deren Hilfe stabile Druckverhältnisse in den zwangsbelüfteten Räumen voreingestellt werden können. Die Verstellmechanismen 10 für die gemeinsamen Klappenachsen 9 stehen mit der Steuerungszentrale des Gebäudes in Verbindung. Über diese Steuerungszentale werden die gewünschten klimatischen Bedingungen in den Einzelräumen durch wahlweises Betätigen der Verstellmechanismen 10 realisiert.

### Bezugszeichenliste

- 1.1: Frischluftversorgungsleitung für vorbehandelte Frischluft
- 1.2.: Frischluftversorgungsleitung für unbehandelte Frischluft
- 2: Seitenwand der Frischluftversorgungsleitung
- 3: Klappe für den Austritt unbehandelter Frischluft
- 4: Klappe für den Austritt vorbehandelter Frischluft
- 5: Achse für die Frischluftaustrittsklappen
- 6.1: Abluftleitung für vorbehandelte verbrauchte Frischluft
- 6.2: Abluftleitung für unbehandelte verbrauchte Frischluft
- 7: Seitenwand der Abluftleitung
- 8: Klappe für den Eintritt der Abluft
- 9: Achse für die Verschlußklappen
- 10: Verstellmechanismus für die gemeinsame Klappenachse
- 11: Frischluftmischkasten
- 12: Abluftsammler
- 13: Regelklappe
- 14: Zwischenwand des Mischkastens

## Patentansprüche

1. Raumlüftungssystem für Gebäudesammellüftungsanlagen unter Einsatz von Rohrleitungssystemen, **dadurch gekennzeichnet,**
**daß** wenigstens zwei Frischluftversorgungsleitungen (1.1, 1.2) über ein Klappenstellregister mit Kontakt zu dem jeweils zu belüftenden Raum angeordnet sind,
**daß** wenigstens je eine Seitenwand (2) der Frischluftversorgungsleitungen (1.1, 1.2) in einer gemeinsamen Ebene angeordnet sind,
**daß** die Klappe (3) für die Steuerung des Austritts physikalisch unbehandelter Frischluft und die Klappe (4) für die Steuerung des Austritts physikalisch vorbehandelter Frischluft auf einer gemeinsamen Achse (5) zueinander in einem Winkel zwischen 0° bis 90° starr befestigt sind, wobei die gemeinsame Achse in einer gemeinsamen Ebene der Frischluftversorgungsleitungen (1.1, 1.2) angeordnet sind und
**daß** die gemeinsame Achse (5) für die Frischluftaustrittsklappen (3, 4) mit einem regelbaren Verstellmechanismus (10) in Verbindung steht.

2. Raumlüftungssystem für Gebäudesammellüftungsanlagen unter Einsatz von Rohrleitungssystemen, **dadurch gekennzeichnet,**
**daß** wenigstens zwei Frischluftversorgungsleitungen (1.1, 1.2) und wenigstens eine der Abluftleitungen (6.1, 6.2) über ein Klappenstellregister mit Kontakt zu dem jeweils zu belüftenden Raum angeordnet sind,
**daß** wenigstens je eine Seitenwand (2, 7) der Frischluftversorgungsleitungen (1.1, 1.2) und einer der Abluftleitungen (6.1, 6.2) in einer gemeinsamen Ebene angeordnet sind,
**daß** die Klappe (3) für die Steuerung des Austritts physikalisch unbehandelter Frischluft, die Klappe (4) für die Steuerung des Austritts physikalisch vorbehandelter Frischluft und die Klappe (8) für die Steuerung des Lufteintritts in wenigstens eine der Abluftleitungen (6.1, 6.2) auf einer gemeinsamen Achse (9) starr befestigt sind, wobei die gemeinsame Achse (9) in einer gemeinsamen Ebene der Seitenwände von Frischluftversorgungs- und Abluftleitungen (1.1, 1.2, 6.1, 6.2) angeordnet sind,
**daß** die gemeinsame Achse (9) für die Frischluftaustrittsklappen (3, 4) und für die Abluftleitungsverschlußklappe (8) mit einem regelbaren Verstellmechanismus (10) in Verbindung steht.

3. Raumlüftungssystem für Gebäudesammellüftungsanlagen unter Einsatz von Rohrleitungssystemen nach einem der Ansprüche 1 und 2, **dadurch gekennzeichnet, daß** zwischen den Frischluftversorgungs- und Abluftleitungen (1.1, 1.2, 6.1, 6.2) und den zu versorgenden Räumen Frischluftmischkästen (11) und Abluftsammler (12) angeordnet sind.

4. Raumlüftungssystem für Gebäudesammellüftungsanlagen unter Einsatz von Rohrleitungssystemen nach einem der Ansprüche 1 bis 3, **dadurch gekennzeichnet, daß** in den Frischluftmischkästen (11) und Abluftsammlern (12) die gewünschte Drucksituation in den zu versorgenden Räumen gewährleistende verstellbare Regelklappen (13) angeordnet sind.

5. Raumlüftungssystem für Gebäudesammellüftungsanlagen unter Einsatz von Rohrleitungssystemen nach einem der Ansprüche 1 bis 4, **dadurch gekennzeichnet, daß** als regelbare Verstellmechanismen (10) für die gemeinsame Achse (5, 9) der Klappen (3, 4, 8) an den Frischluftversorgungs- und Abluffleitungen (1.1, 1.2, 6.1, 6.2) und für die Regelklappen (13) Stellmotoren angeordnet sind.

6. Raumlüftungssystem für Gebäudesammellüftungsanlagen unter Einsatz von Rohrleitungssystemen nach einem der Ansprüche 1 bis 5, **dadurch gekennzeichnet, daß** wenigstens in den Frischluftmischkästen (11) die Vermischung der Frischluftströme fördernde feststehende oder verstellbare Leitbleche angeordnet sind.

7. Raumlüftungssystem für Gebäudesammellüftungsanlagen unter Einsatz von Rohrleitungssystemen nach einem der Ansprüche 1 bis 6, **dadurch gekennzeichnet, daß** die an den Frischluftversorgungsleitungen (1.1, 1.2) und Abluftleitungen (6.1, 6.2) unmittelbar nebeneinander für die Be- und Entlüftung verschiedener Räume oder Raumbereiche angeordneten Frischluftmischkästen (11) und Abluftsammler (12) mit Zwischenwänden (14) voneinander getrennt ausgeführt sind.

8. Raumlüftungssystem für Gebäudesammellüftungsanlagen unter Einsatz von Rohrleitungssystemen nach einem der Ansprüche 1 bis 7, **dadurch gekennzeichnet, daß** die Frischluftversorgungsleitungen (1.1, 1.2), die nachgeordneten Frischluftmischkästen (11), die Abluftleitungen (6.1, 6.2) und/oder die Verstellmechanismen (10) mit wärme-, kälte- und/oder schalldämmenden Umhüllungen oder Auskleidungen ausgestattet sind.

9. Raumlüftungssystem für Gebäudesammellüftungsanlagen unter Einsatz von Rohrleitungssystemen nach einem der Ansprüche 1 bis 8, **dadurch gekennzeichnet, daß** die Einzelkomponenten (1.1, 1.2, 3 -5, 6.1, 6.2, 8 - 14) des Raumlüftungssystems leicht montage- und demontagefähig modulartig ausgebildet sind.

10. Verfahren zur Anwendung eines Raumlüftungssystems nach den Ansprüchen 1 bis 9, **dadurch gekennzeichnet,**
**daß** für Zwecke der Raumbeheizung wenigstens ein Frischluftstrom durch Erwärmung thermisch vorbehandelt wird,
**daß** für Zwecke der Raumkühlung wenigstens ein Frischluftstrom durch Kühlung thermisch vorbehandelt wird,
**daß** für Zwecke der Raumluftfeuchteregulierung wenigstens ein Frischluftstrom durch Be- oder Entfeuchtung vorbehandelt wird und
**daß** für Zwecke der Raumklimatisierung wenigstens ein Frischluftstrom durch Energiezuführung oder -entzug und durch Be- oder Entfeuchtung vorbehandelt wird.

11. Verfahren zur Anwendung eines Raumlüftungssystems nach den Ansprüchen 1 bis 10, **dadurch gekennzeichnet, daß** für Zwecke der Raumbeheizung wenigstens ein Teil der mechanisch gereinigten und entfeuchteten Abluft des Raumlüftungssystems nach-Zuführung der benötigten Zusatzenergie als thermisch vorbehandelte Frischluft eingesetzt wird.

12. Verfahren zur Anwendung eines Raumlüftungssystems nach den Ansprüchen 1 bis 11, **dadurch gekennzeichnet, daß** durch Voreinstellung der Feststellklappen in den Frischluftmischkästen und Abluftsammlern im belüfteten Raum ein Über- oder Unterdruck erzeugt wird.
